# EUROPEAN PATENT SPECIFICATION

(11) **EP 3 138 772 B1**
(45) Date of publication and mention of the grant of the patent: **04.09.2019**
(21) Application number: 15786431.5
(22) Date of filing: 30.04.2015
(51) Int. Cl.: B64C 25/54, B63B 1/22, B63B 39/00, B64C 35/00

(54) **DEVICE FOR SUPPRESSING PITCH ANGLE FLUCTUATION IN SEAPLANE**
VORRICHTUNG ZUR UNTERDRÜCKUNG DER NEIGUNGSWINKELSCHWANKUNGEN EINES WASSERFLUGZEUGS
DISPOSITIF PERMETTANT DE SUPPRIMER LA FLUCTUATION DE L'ANGLE DE PAS D'UN HYDRAVION

(30) Priority: 30.04.2014 JP 2014093790
(43) Date of publication of application: 08.03.2017
(73) Proprietor: Hiyoh Aircraft Manufacturing Co., Ltd., Tokyo 142-0041 (JP)
(72) Inventor: SAKURAI, Tatsumi, Tokyo 140-0002 (JP)
(74) Representative: dompatent von Kreisler Selting Werner - Partnerschaft von Patent- und Rechtsanwälten mbB
(86) International application number: PCT/JP2015/062960
(87) International publication number: WO 2015/166978

(56) References cited:
- FR-A1- 2 660 279
- JP-A- 2006 224 686
- JP-A- 2006 224 686
- JP-B1- S 431 308
- SE-C1- 146 651
- US-A- 2 064 674
- US-A1- 2003 164 424
- US-A1- 2003 164 424
- US-A1- 2010 044 506
- US-A1- 2010 044 506

## Description

### TECHNICAL FIELD

The present invention relates to a seaplane that takes off from or lands on the water surface, and particularly relates to a device for suppressing pitch angle fluctuations in a seaplane, which device suppresses pitch angle fluctuations caused at the main body of the seaplane by waves at the seaplane' s taking off from or landing on the water surface.

### BACKGROUND ART

A seaplane that takes off from or lands on the surface of the sea, rivers, lakes, etc., is widely known. The seaplane is structured such that a float is attached to the lower part of the main body of the seaplane. Buoyancy acting on the float allows the seaplane main body to float on the water surface, and the seaplane slides over the water surface via the float, thus taking off from or landing on the water surface.

When the water surface is wavy, the seaplane on the water surface behaves in such a way that when the float climbs over a wave, the front part of the float moves upward as the rear part of the float moves downward and after the float has climbed over the wave, the front part moves downward as the rear part moves upward (this behavior will hereinafter be referred to as "up-and-down movement"). This up-and-down movement of the float is transmitted directly to the seaplane main body having the float attached integrally thereto, thus causing a pitch angle of the seaplane main body to change.

The above up-and-down movement of the float becomes larger as the wave becomes higher, in which case, consequently, a change in the pitch angle of the seaplane main body becomes larger.

The pitch angle of the seaplane greatly affects its aerodynamic characteristics, leading to, for example, creation of lift acting on the seaplane. A greater change in the pitch angle makes the seaplane incapable of taking off from or landing on the water surface.

The above seaplane having the float attached integrally to the seaplane main body thus comes to have difficulty in flying when a wave high enough to give the seaplane main body a pitch angle higher than a reference value acts on the seaplane. In other words, the seaplane has a problem that it can operate only in the situation where the water surface remains calm to some extent.

To solve such a problem, the applicant of the present invention has proposed a technique disclosed in patent document 1, according to which a buffering member is interposed between the float and the seaplane main body and when the float is caused to move up and down by a wave, this up-and-down movement of the float is absorbed by the buffering member to suppress pitch angle fluctuations caused at the seaplane main body.

### PRIOR ART DOCUMENTS

### PATENT DOCUMENT

Patent document 1: Japanese Unexamined Patent Application Publication No. 2006-224686

US 2064674 A relates to flexible mountings for airplane floats on aircraft.

### SUMMARY OF THE INVENTION

### Problem to Be Solved by the Invention

According to the above technique, an effect of suppressing the pitch angle fluctuations of the seaplane main body, which effect is achieved by the buffering member, raises, to some extent, the upper limit of the height of a wave the seaplane can handle for its flight. However, a verification of a state of contact between the float and the water surface at the seaplane's taking off from or landing on the water surface has revealed that the shapes of seaplanes to which the technique can be applied are limited. This has led to recognition that further improvement is necessary.

The present invention has been conceived in view of the above knowledge, and it is therefore the object of the invention to provide a device for suppressing pitch angle fluctuations in a seaplane, which device reduces the up-and-down movement of a float transmitted to a seaplane main body to the minimum, thereby retains an effect of suppressing pitch angle fluctuations caused at the seaplane main body and at the same time, can increase the number of types of seaplanes to which the device can be applied.

### Means for Solving the Problem

In order to solve the above problem, a seaplane according to claim 1 is provided.

Being configured in such a manner, the seaplane is caused to float on the water surface by buoyancy acting on the float. When the water surface is calm, the urging force of the linking means keeps the turning member at the normal position along the length direction of the base member, relative to the base member. This holds the float in a straight shape.

When the seaplane starts sliding on the calm water surface, the float moves slidably over the water surface with less up-and-down movements while maintaining its shape and position.

As a result, a pitch angle of the seaplane main body above the float hardly changes, which allows the seaplane to slide smoothly.

The pitch angel of the seaplane main body is thus kept substantially constant, remaining equal to or smaller than a reference value. This allows stable talking off from or landing on the water surface that accompanies less change in aerodynamic characteristics.

In a situation where waves are low, the turning member located at an end part of the float is pushed up by a wave when the seaplane takes off from or lands on the water surface. The urging force of the linking member, however, is larger than the upward pushing force of the wave. This keeps the turning member at the normal position, thus allowing the turning member and based member to maintain their mutual positional relationship. As a result, the float as a whole is moved up and down in an integral manner.

When such an up-and-down movement of the float arises, the pitch angle of the seaplane main body linked to the base member changes as a consequence.

However, because the wave is low, a change in the pitch angle of the seaplane main body turns out to be small, which leads to a smaller change in the aerodynamic characteristics of the seaplane. Hence the seaplane can operate with its taking off from or landing on the water surface not hampered.

In a situation where waves get higher and consequently the upward pushing force of waves against the turning member becomes larger than the urging force of the linking member, when the float encounters a wave, the turning member is pushed upward against the urging force of the linking member, that is, the turning member is turned relative to the base member.

The wave pushing up the turning member then acts on the base member to try to push it up. However, at the point that the turning member is pushed up to an elevated position, the base member is located below the turning member. The base member is, therefore, brought into contact with the wave at its lower position.

As a result, the extent of an upward push to the base member is kept small and therefore pitch angle fluctuations caused at the seaplane main body linked to the base member are suppressed.

Because the pitch angle fluctuations of the seaplane are suppressed in this manner, the pitch angle of the seaplane can be kept within a specified value even against a higher wave. The seaplane can therefore be operated under a wider range of surface water conditions.

The linking member deforms when the turning member is turned. This alleviates a process of transmitting impact on the turning member to the base member and the seaplane main body, thus preventing excessive pitching of these members and the degradation of comfort of passengers in the seaplane.

According to the present invention, the turning member is disposed at the front of the base member or at both the front and back of the base member.

According to the present invention, the linking means is provided as an elastic material linked to the base member and to the tuning member.

An anisotropic elastic material (e.g., elastic material whose elastic coefficients in the directions of three axes, X-axis, Y-axis, and Z-axis, are perpendicular to each other) is used as this elastic material. Specifically, a fiber-reinforced plastic mold using glass fibers, etc., and a laminated body made by pasting sheets of the molds together are cited as examples of such an elastic material. The elastic material is formed in such a way as to have a sectional shape matching the shape of respective counter faces of the base member and turning member, and is bonded integrally to the base member and turning member, using an adhesive, etc. The elastic material is thus fitted together with the base member and turning member in-between thereof.

In this configuration, the elastic material serves as a single member that achieves a function of linking the base member and the turning member together, a function of turning the turning member, and a function of creating an urging force that urges the turning member toward the normal position. This allows a simpler configuration.

The linking means may be composed of a hinge mechanism linking the base member to the turning member in such a way as to allow them rotate freely and a compression spring or tensile spring set straddling the hinge mechanism and interposed between the base member and the turning member.

In this configuration, the linking means is structured as a mechanical means, whose urging force is adjusted easily and strength is retained easily.

The linking means may be given an attenuating function of attenuating the urging force of the compression spring.

Such an attenuating function, for example, may be given by a cylindrical attenuator using a gas or oil as a hydraulic fluid.

In this configuration, when the turning member is turned, its turning motion is smoothly reduced to zero, so that unnecessary movements or vibrations are suppressed.

In claim 5 or 6, it is preferable that a substantially spherical projection be formed on one of the base member and the turning member while a recession, in which the projection is fitted, be formed on the other of the same, that a non-hydrous sealing material capable of elastic deformation be interposed between respective counter faces of the base member and the turning member, or that a flexible waterproof sheet be provided such that it covers the periphery of the counter faces of the base member and the turning member to watertightly close up a space between the counter faces.

In this configuration, a gap between the turning member and the base member, the gap being formed when the turning member is turned, is reduced to the minimum. This allows suppression of an increase in resistance against the float that is caused by water flowing into the gap.

A buffer having an elasticity function and an attenuating function, the buffer linking the seaplane main body to the base member of the float in such a way as to allow them to move relative to each other, may be disposed between the seaplane main body and the base member.

In this configuration, the up-and-down movement of the base member is attenuated by the buffer, which further suppresses the pitch angle fluctuations of the seaplane main body.

The device for suppressing pitch angle fluctuations as described above is provided on the float. The device, therefore, can be applied to any type of seaplane having one or two floats and also to a flying boat whose float serves as its main body.

In a case where the device is applied to such a flying boat, the above base member is regarded as the flying boat main body. The device thus can be applied to various types of seaplanes that take off from or land on the water surface.

### Effect of the Invention

The device of the present invention suppresses pitch angle fluctuations caused at a seaplane main body, can be applied to various types of seaplanes that take off from or land on the water surface, and allows these seaplanes to operate in a situation where waves are higher.

### BRIEF DESCRIPTION OF THE DRAWINGS

FIG. 1 is a side view of a seaplane to which a first embodiment of the present invention is applied;
FIG. 2 is a front view of the seaplane to which the first embodiment of the present invention is applied;
Fig. 3 is a side view of the seaplane for explaining an effect of the first embodiment of the present invention;
FIG. 4 is a chart showing the result of a simulation of the pitch angle fluctuations of the seaplane;
FIG. 5 is a side view of the seaplane to which a second embodiment of the present invention is applied;
FIG. 6 is a front view of the seaplane to which the second embodiment of the present invention is applied;
FIG. 7 is a side view of the float to which a third embodiment of the present invention is applied;
FIG. 8 is a plan view of the float to which the third embodiment of the present invention is applied;
Fig. 9 is a side view of the float for explaining an effect of the third embodiment of the present invention;
FIG. 10 is a side view of the float to which a fourth embodiment of the present invention is applied;
FIG. 11 is a side view of the float, the side view showing a modification of a fifth embodiment of the present invention;
FIG. 12 is a side view of the float, the side view showing a modification of a sixth embodiment of the present invention;
FIG. 13 is a perspective view of a seaplane according to a seventh embodiment of the present invention; and
FIG. 14 is a perspective view of a different seaplane to which the first embodiment of the present invention is applied

### BEST MODE FOR CARRYING OUT THE INVENTION

A first embodiment of the present invention will hereinafter be described, referring to drawings.

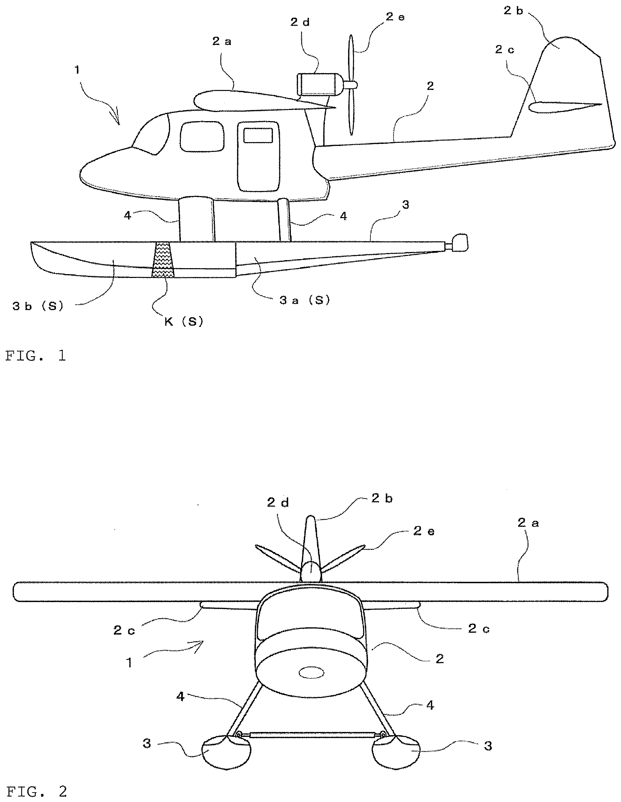

In Fig. 1, reference numeral 1 denotes a seaplane to which this embodiment is applied. The seaplane 1 includes a seaplane main body 2 and floats 3 attached to the lower part of the seaplane main body 2. The floats 3 are each provided with a device S for suppressing pitch angle fluctuations according to this embodiment.

The seaplane main body 2 has a wing 2a disposed on top of the center of the seaplane main body 2, a vertical tail 2b disposed on top of the rear of the seaplane main body 2, horizontal tails 2c disposed on both side faces of the lower part of the vertical tail 2b, respectively, an engine 2d disposed above the rear of the wing 2a, and a propeller 2e for generating propelling power, which is attached to the engine 2d.

As shown in Fig. 2, the floats 3 are attached to both sides of the seaplane main body 2, respectively. Each float 3 is divided into two parts in its length direction such that a rear part serves as a base member 3a while a front part serves as a turning member 3b. The turning member 3b is allowed to turn in a range between a normal position, at which the turning member 3b is positioned in the length direction of the float, and an active position, at which the turning member 3b is positioned higher than the length direction of the float 3.

The float 3 has its base member 3a fixed integrally to the seaplane main body 2 via a plurality of leg members 4. Between the base member 3a and the turning member 3b, a linking means K is disposed for linking the base member 3a to the turning member 3b. This linking means K is made of an elastic material, of which the elastic deformation allows the turning member 3b to turn toward the active position, relative to the base member 3a. The elastic force of the linking means K urges the turning member 3b to return to the normal position. These base member 3a, turning member 3b, and linking means K make up the device S for suppressing pitch angle fluctuations according to this embodiment.

The linking means K has end faces whose shape is substantially identical with the shape of the front end face of the base member 3a and with the shape of the rear end face of the turning member 3b. The linking means K is provided as an anisotropic elastic material (e.g., elastic material whose elastic coefficients in the directions of three axes, X-axis, Y-axis, and Z-axis, are perpendicular to each other), which is made of a fiber-reinforced plastic using glass fibers, etc. The linking means K is bonded integrally to the base member 3a and to the turning member 3b, using an adhesive, etc.

When an external force, which causes the turning member 3b to turn upward, is applied to the turning member 3b, the linking means K deforms elastically to allow the turning member 3b to turn. As the external force diminishes, the linking means K applies an urging force to the turning member 3b, which urging force causes the turning member 3b to return to the position before its turning, i.e., to the above normal position.

According to this embodiment offering such a configuration, the effect of the device S for suppressing pitching fluctuations positions the base member 3a and turning member 3b of the float 3 on a straight line, that is, keeps them at the normal position, as shown in Fig. 1, in which state the seaplane floats on the water surface.

When the seaplane starts its flight operation on the calm water surface, the seaplane starts sliding over the water surface with the float 3 kept in its straight position, and continues to slide with less up-and-down movements.

As a result, pitch angle fluctuations caused at the seaplane main body 2 linked to the float 3 remain small, which gives the seaplane stable aerodynamic characteristics, allowing it to behave in a stable manner.

Higher waves lead to the larger up-and-down movement of the float 3. As a result, in the case of a conventional seaplane, the pitch angle fluctuations of the seaplane main body 2 grow larger.

When waves grow higher enough to cause pitch angle fluctuations that make it impossible for the seaplane to retain flight stability, the seaplane comes to have difficulty in operation.

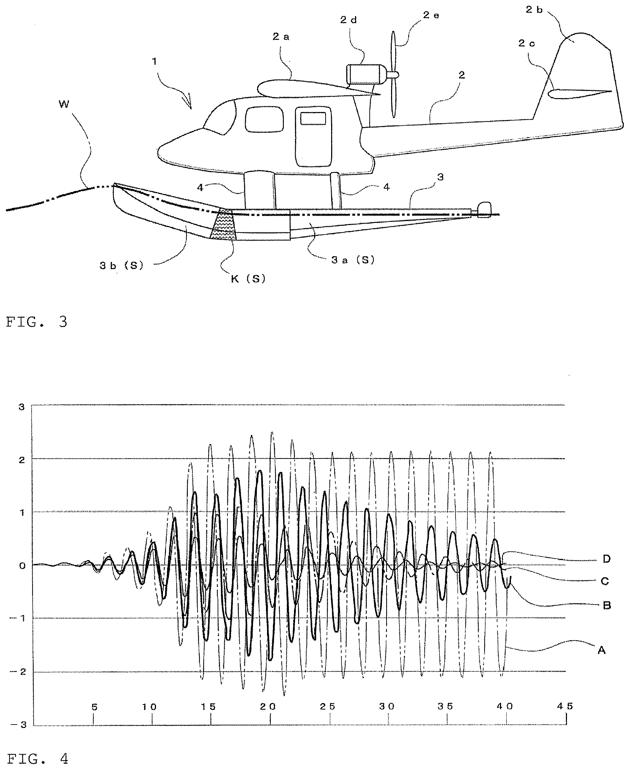

According to this embodiment, when waves grow higher to a certain level and the upward pushing force of a wave W exceeds the urging force of the linking means K, the wave W pushes up the turning member 3b on the front part of the float 3, as shown in Fig. 3.

In this process, the turning member 3b is turned upward around the linking means K, which moves the front end of the turning member 3b upward. Meanwhile, the rear end of the turning member 3b is moved up to a smaller extent than the front end. The rear end of the turning member 3b thus stays at a lower position, and the front end of the base member 3a, which is linked to the turning member 3b, also stays at a lower position.

The base member 3a thus comes in contact with the wave while remaining at its lower position. This allows the base member 3a to climb past the wave at a lower level, which suppresses the up-and-down movement of the base member 3a.

The turning member 3b having climbed past the wave is caused to return to the normal position by the elastic force of the linking means K, quickly coming in contact with the water surface that follows the wave the turning member 3b having climbed past. This move suppresses the downward movement of the base member 3a.

Hence not only the upward movement of the base member 3a but also the downward movement of the same is suppressed. This achieves an overall effect that the up-and-down movement of the base member 3a is reduced, which means that the seaplane main body 1 is kept in a position closer to a horizontal position with less pitch angle fluctuations.

In this manner, the pitch angle fluctuations of the seaplane main body 2 linked to the base member 3a are suppressed and a change in the aerodynamic characteristics of the seaplane 1 is kept small.

This allows the seaplane to operate on the water surface with high waves, thus easing restrictions on weather conditions under which the seaplane can be operated.

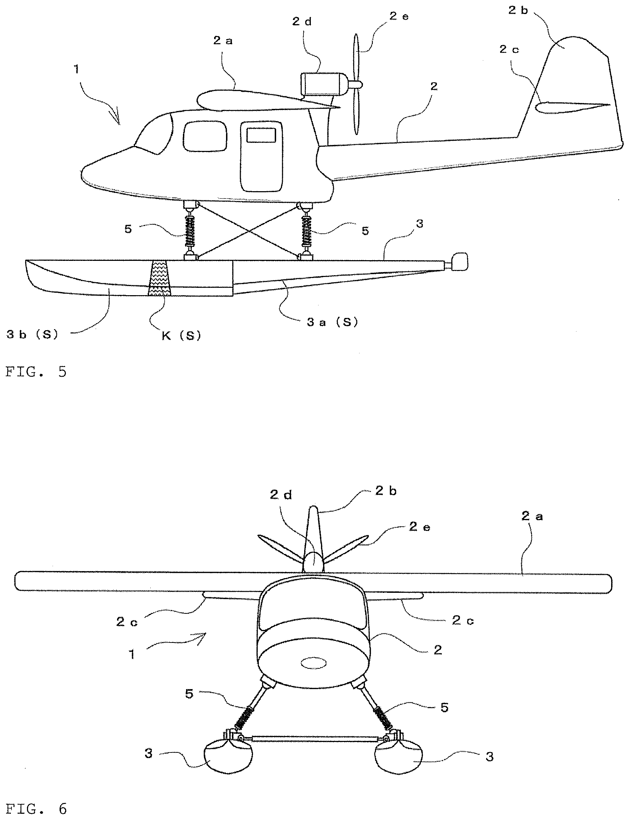

A second embodiment of the present invention will then be described, referring to Figs. 5 and 6.

In the following description, the same components as described in the above first embodiment will be denoted by the same reference numerals and will be omitted in further description.

This embodiment offers a configuration in which buffers 5 having an elastic function and an attenuating function are disposed between the base member 3a of the float 3 and the seaplane main body 2.

According to this configuration, the buffers 5 attenuate the up-and-down movement of the base member 3a and transmit the attenuated up-and-down movement to the seaplane main body 2.

This further enhances the effect achieved by the first embodiment, thus offering an effect of suppressing pitch angle fluctuations against higher waves.

Fig. 4 depicts the result of a simulation of the pitch angle fluctuations of the seaplane 1. A curve A represents pitch angle fluctuations in a conventional seaplane not having the device for suppressing pitch angle fluctuations. A curve B represents pitch angle fluctuations in the seaplane having the device for suppressing pitch angle fluctuations according to the first embodiment of the present invention. A curve C represents pitch angle fluctuations in a seaplane having a device for suppressing pitch angle fluctuations according to an invention filed by the applicant prior to the present invention. A curve D represents pitch angle fluctuations in a seaplane having a device for suppressing pitch angle fluctuations according to the second embodiment, which device is a combination of the device for suppressing pitch angle fluctuations according to the first embodiment of the present invention and the device for suppressing pitch angle fluctuations according to the invention filed prior to the present invention.

As it is clearly understood from the simulation result, the first embodiment of the present invention offers an effect of suppressing pitch angle fluctuations higher than an effect of suppressing pitch angle fluctuations offered by the conventional case. Combining the device for suppressing pitch angle fluctuations according to the first embodiment with the same according to the invention filed prior to the present invention achieves the effect of suppressing pitch angle fluctuations as an extremely high level of effect.

Observing this result in terms of comparison between the length of the seaplane 1 and the height of a wave leads to a conclusion that the height of a wave that allows the seaplane 1 to take off from or land on the water surface is 1/10 of the length of the seaplane 1.

In this manner, the effect of suppressing pitch angle fluctuations leads to stabilized flight and offers another effect of reducing impact at the seaplane's taking off from or landing on the water surface. The effect also suppresses porpoising, which refers to such destabilizing behavior of the seaplane 1 that it starts bouncing on the water surface and continues to bounce ceaselessly.

Such effects enable various activities including swift ferrying to isolated islands and medical services there, which are used to be unconceivable, making access to an area, to which land routes are closed due to a disaster, from the area' s seashore, supplying medial goods, food, etc., maintain/checking off-shore wind power generation facilities and tidal current power generation facilities, fish-finding on the vast sea, quickly transporting catches from the deep sea, maintain/checking marine culture facilities, coastal guarding, and aerial fire fighting against bushfire carried out by scooping water/seawater from the sea/lake surface to spray water.

It is understood from the simulation result that the effect of suppressing pitch angle fluctuations according to the first embodiment is smaller than the effect of suppressing pitch angle fluctuations according to the invention filed prior to the present invention. According to the invention filed prior to the present invention, the device for suppressing pitch angle fluctuations is disposed between the seaplane main body 2 and the float 3, which limits types of seaplanes to which the device is applicable. In contrast, the device for suppressing pitch angle fluctuations according to the first embodiment is provided as the float 3 itself. This device, therefore, can be applied to a so-called flying boat whose float itself serves as the main body of the flying boat. The device thus offers an advantage that its range of applications is wider.

The shapes and sizes of components described in the above embodiments are examples and may be changed to various shapes and sizes according to design requirements, etc.

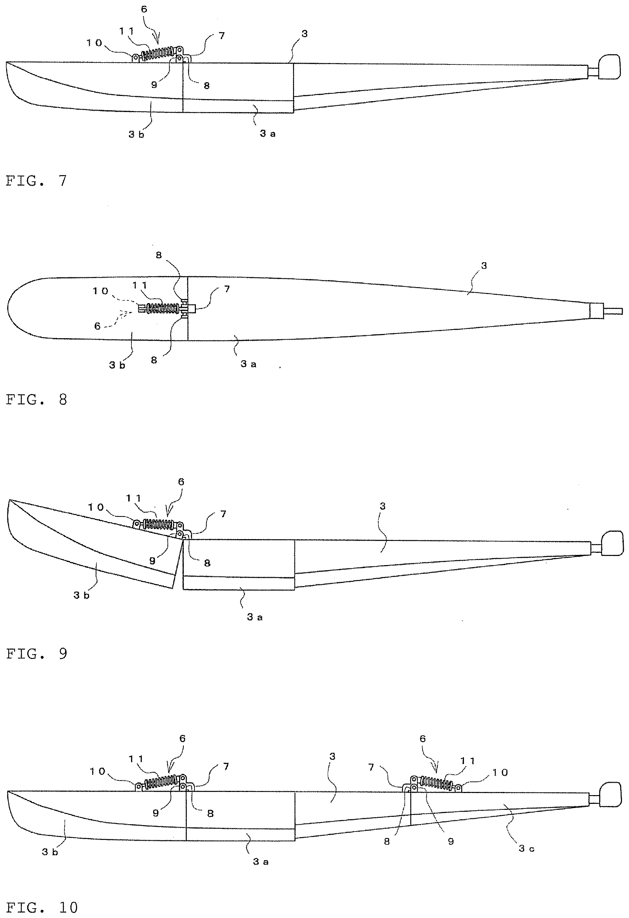

For example, the linking means K described in the above embodiments may be replaced with a linking means 6 shown in Figs. 7 to 9.

The linking means 6 is structured in the following manner. A link piece 7 is fixed on top of the vicinity of the linking part linking the base member 3a to the turning member 3b and is connected rotatably to a bracket 8 disposed on top of the turning member 3b, via a pivot 9, to form a hinge mechanism. A bracket 10 is disposed at a position where is separated from the hinge mechanism of the turning member 3b, and a buffer 11 composed of a compression spring and an attenuator is connected rotatably to the bracket 10 and to the link piece 7.

The linking means 6 structured in this manner works in the following manner. In a normal situation, the compression spring of the buffer 11 causes the turning member 3b to stay at the normal position, thus keeping the turning member 3b straight relative to the base member 3a. When an upward pushing force acts on the turning member 3b, as shown in Fig. 9, the compression spring is compressed, allowing the turning member 3b to turn. As the upward pushing force on the turning member 3b diminishes, the compression spring allows the turning member 3b to return toward the normal position.

As the turning member 3b makes its turning motion, the elastic force of the compression spring is attenuated by the attenuator. This reduces the turning motion of the turning member 3b to zero, that is, causes the turning member 3b to stop turning.

The above embodiment indicates the example in which the float 3 is divided into two parts to form the turning member 3b on the front end part of the float 3. As shown in Fig. 10, the float 3 may be divided into three parts in its length direction such that the central part serves as the base member 3a and the other parts at the front and rear of the base member 3a serve as turning members 3b and 3c.

In Fig. 10, the linking means 6 are used to link the above members together. The above linking means K of the first embodiment, however, may be used in place of the linking means 6.

In this manner, in a case where the turning member 3c is provided at the rear of the base member 3a to make up the device S for suppressing pitch fluctuations, when the seaplane 1 is about to land on the water surface, the turning member 3c at the rear is allowed to land first on the water surface to actuate the device S for suppressing pitch fluctuations, in which case the up-and-down movement of the base member 3a is suppressed.

Hence the pitch angle fluctuations of the seaplane main body 2 at the seaplane's landing on the water surface can be suppressed effectively.

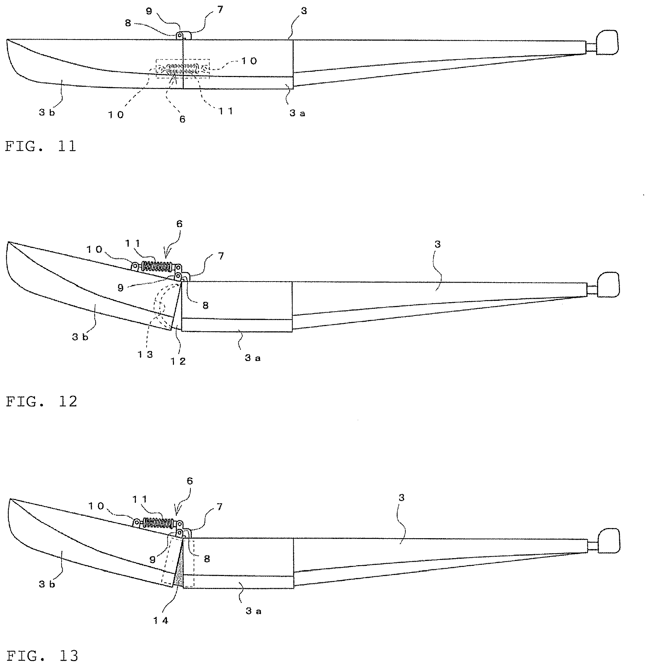

As shown in Fig. 11, the linking means 6 may be disposed between the counter face of the base member 3a and that of the turning member 3b.

When the buffer 11 is used as the linking means 6, the spring of the buffer 11 must be a tensile spring.

Use of the above linking means 6 may lead to an assumed case where gaps are formed between the base member 3a and the turning members 3b and 3c and when the turning members 3b and 3c are turned, the gaps are expanded, allowing water to flow therein to create resistance to the seaplane's sliding.

To solve this problem, as shown in Fig. 12, a substantially spherical projection 12 is formed on one of the base member 3a and the turning member 3b (formed on the base member 3a in Fig. 12) while a recession 13, in which the projection 11 is fitted, is formed on the other of the same. Fitting the projection 12 in the recession 13 reduces the gap between the base member 3a and the turning member 3b.

In another case, as shown in Fig. 13, a non-hydrous sealing material 14 capable of elastic deformation is interposed between the counter face of the base member 3a and that of the turning member 3b to fill the gap with the sealing material 14.

In still another case, a flexible waterproof sheet (not depicted) is provided such that it covers the periphery of the counter faces of the base member 3a and turning member 3b to watertightly close up the gap between the counter faces. This sheet covers up the gap tightly to prevent water from flowing into the gap.

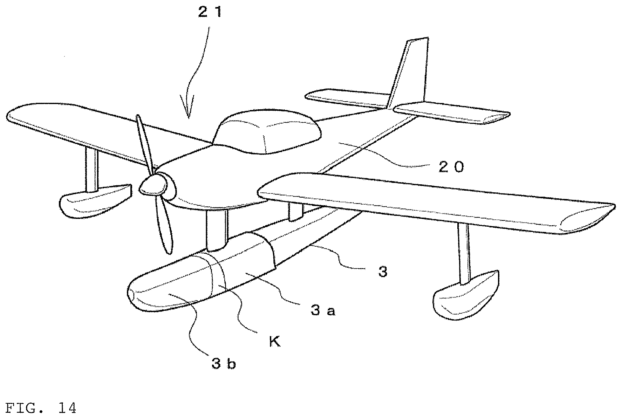

In each of the above embodiments, examples of applying the device S to the seaplane 1 having a pair of the floats 3 are described. However, as described in Fig. 14, the device S may also be applied to a seaplane 21 having one float 3 attached to the lower part of a seaplane main body 20. As described above, the device S may also be applied to a flying boat structured such that the float itself serves as the main body of the flying boat.

### Explanation of Letters and Numerals

- 1: Seaplane
- 2: Seaplane main body
- 2a: Wing
- 2b: Vertical tail
- 2c: Horizontal tail
- 2d: Engine
- 2e: Propeller
- 3: Float
- 3a: Base member
- 3b: Turning member
- 3C: Turning member
- 4: Leg member
- 5: Buffer
- 6: Linking means
- 7: Link piece
- 8: Bracket
- 9: Pivot
- 10: Bracket
- 11: Buffer
- 12: Projection
- 13: Recession
- 14: Sealing member
- 20: Seaplane main body
- 21: Seaplane
- K: Linking means
- S: Device for suppressing pitching fluctuations
- W: wave

## Claims

1. A seaplane (1) comprising: a float (3) attached to a lower part of a main body (2) of the seaplane, **characterized in that** the seaplane further comprises: a device for suppressing pitch angle fluctuations in the seaplane
the device comprising:
a base member (3a) provided by dividing the float in its length direction, the base member being a central part of the float and linked to the seaplane main body;
a turning member (3b) connected at a lengthwise end of the base member, the turning member being capable of turning between a normal position at which the turning member is positioned along a length direction of the base member and an active position at which the turning member is positioned higher than the length direction of the base member; and
a linking means (K) disposed between the base member and the turning member, the linking means linking the two members together in such a way as to allow them to rotate relative to each other and urging the turning member to toward the normal position, wherein
the linking means forms a center of turn of the turning member on an upper part of the float.

2. A seaplane according to claim 1, wherein
the turning member is provided at front of the base member.

3. A seaplane according to claim 1, wherein
the turning member is provided at front of the base member and at rear of the same.

4. A seaplane according to any one of claims 1 to 3, wherein
the linking means is made of an elastic material linked to the base member and to the turning member.

5. A seaplane according to any one of claims 1 to 3, wherein
the linking means includes:
a hinge mechanism linking the base member to the turning member in such a way as to allow them rotate freely; and
a spring set straddling the hinge mechanism and interposed between the base member and the turning member.

6. A seaplane according to claim 5, wherein
the linking means has an attenuating function of attenuating an urging force of the spring.

7. A seaplane according to claim 5 or 6, wherein
a substantially spherical projection is formed on one of the base member and the turning member while a recession allowing the projection to be fitted therein is formed on the other of the same.

8. A seaplane according to claim or 6, wherein
a non-hydrous sealing material capable of elastic deformation is interposed between a counter face of the base member and a counter face of the turning member.

9. A seaplane according to claim 5 or 6, wherein
a flexible waterproof sheet is provided such that it covers periphery of respective counter faces of the base member and the turning member to water tightly close up a space between the counter faces.

10. A seaplane according to any one of claims 1 to 9, wherein
a buffer (5) having an elasticity function and an attenuating function is disposed between the seaplane main body and the base member of the float, the buffer linking the seaplane main body to the base member in such a way as to allow them to move relative to each other.

## Patentansprüche

1. Wasserflugzeug (1) mit einem Schwimmer (3), der an einem unteren Teil des Hauptkörpers (2) des Wasserflugzeugs befestigt ist,
**dadurch gekennzeichnet, dass** das Wasserflugzeug ferner eine Vorrichtung zum Unterdrücken von Neigungswinkelschwankungen des Wasserflugzeugs aufweist,
wobei die Vorrichtung aufweist:
ein Basiselement (3a), das durch Teilen des Schwimmers in seiner Längenrichtung ausgebildet wird, wobei das Basiselement ein Mittelteil des Schwimmers ist und mit dem Hauptkörper des Wasserflugzeugs verbunden ist;
ein Drehelement (3b), das an einem Längsende des Basiselements verbunden ist, wobei sich das Drehelement zwischen einer normalen Position, in welcher das Drehelement entlang einer Längenrichtung des Basiselements positioniert ist, und einer aktiven Position, in welcher das Drehelement höher als die Längenrichtung des Basiselements positioniert ist, drehen kann; und
einer Verbindungsvorrichtung (K), die zwischen dem Basiselement und dem Drehelement angeordnet ist, wobei die Verbindungsvorrichtung die beiden Elemente derart miteinander verbindet, dass sie sich relativ zueinander drehen können und das Drehelement in die normale Position gedrängt wird, wobei
die Verbindungsvorrichtung ein Drehzentrum des Drehelements auf einem oberen Teil des Schwimmers ausbildet.

2. Wasserflugzeug nach Anspruch 1, wobei das Drehelement an der Vorderseite des Basiselements vorgesehen ist.

3. Wasserflugzeug nach Anspruch 1, wobei das Drehelement an der Vorderseite des Basiselements und an der Rückseite desselbigen vorgesehen ist.

4. Wasserflugzeug nach einem der Ansprüche 1 bis 3, wobei die Verbindungsvorrichtung aus einem elastischen Material besteht, dass mit dem Basiselement und dem Drehelement verbunden ist.

5. Wasserflugzeug nach einem der Ansprüche 1 bis 3, wobei die Verbindungsvorrichtung aufweist:
einen Scharniermechanismus, der das Basiselement mit dem Drehelement derart verbindet, dass beide frei rotieren können; und
einen Federnsatz, der den Scharniermechanismus überspannt und sich zwischen dem Basiselement und dem Drehelement befindet.

6. Wasserflugzeug nach Anspruch 5, wobei die Verbindungsvorrichtung eine Dämpfungsfunktion zum Dämpfen einer Verdrängungskraft der Feder aufweist.

7. Wasserflugzeug nach Anspruch 5 oder 6, wobei ein im Wesentlichen sphärischer Vorsprung auf einem von Basiselement und Drehelement ausgebildet ist, während eine Aussparung, in welche der Vorsprung eingepasst werden kann, auf dem jeweils anderen derselben ausgebildet ist.

8. Wasserflugzeug nach Anspruch 5 oder 6, wobei sich ein nicht wasserhaltiges Dichtmittel, das elastisch verformbar ist, zwischen einer Gegenfläche des Basiselements und einer Gegenfläche des Drehelements befindet.

9. Wasserflugzeug nach Anspruch 5 oder 6, wobei eine flexible wasserfeste Folie derart vorgesehen ist, dass sie die Umfangsfläche der jeweiligen Gegenfläche des Basiselements und des Drehelement bedeckt, um einen Raum zwischen den Gegenflächen wasserdicht zu verschließen.

10. Wasserflugzeug nach einem der Ansprüche 1 bis 9, wobei ein Stoßdämpfer (5) mit einer Elastizitätsfunktion und einer Dämpfungsfunktion zwischen dem Hauptkörper des Wasserflugzeugs und dem Basiselement des Schwimmers angeordnet ist, wobei der Stoßdämpfer den Hauptkörper des Wasserflugzeugs mit dem Basiselement derart verbindet, dass sich beide relativ zueinander bewegen können.

## Revendications

1. Hydravion (1) comprenant : un flotteur (3) attaché à une partie inférieure d'un corps principal (2) de l'hydravion,
**caractérisé en ce que** l'hydravion comprend en outre : un dispositif pour supprimer des fluctuations d'angle de pas dans l'hydravion, le dispositif comprenant :
un organe de base (3a) fourni en divisant le flotteur dans sa direction de longueur, l'organe de base étant une partie centrale du flotteur et lié au corps principal d'hydravion ;
un organe tournant (3b) raccordé au niveau d'une extrémité dans le sens de la longueur de l'organe de base, l'organe tournant étant capable de tourner entre une position normale à laquelle l'organe tournant est positionné suivant une direction de longueur de l'organe de base et une position active à laquelle l'organe tournant est positionné plus haut que la direction de longueur de l'organe de base ; et
un moyen de liaison (K) disposé entre l'organe de base et l'organe tournant, le moyen de liaison liant les deux organes ensemble de manière à leur permettre d'entrer en rotation l'un par rapport à l'autre et poussant l'organe tournant vers la position normale, dans lequel
le moyen de liaison forme un centre de rotation de l'organe tournant sur une partie supérieure du flotteur.

2. Hydravion selon la revendication 1,
dans lequel
l'organe tournant est prévu à l'avant de l'organe de base.

3. Hydravion selon la revendication 1,
dans lequel
l'organe tournant est prévu à l'avant de l'organe de base et à l'arrière de celui-ci.

4. Hydravion selon l'une quelconque des revendications 1 à 3,
dans lequel
le moyen de liaison est réalisé en un matériau élastique lié à l'organe de base et à l'organe tournant.

5. Hydravion selon l'une quelconque des revendications 1 à 3,
dans lequel
le moyen de liaison inclut :
un mécanisme d'articulation liant l'organe de base à l'organe tournant de manière à leur permettre d'entrer en rotation librement ; et
un ensemble de ressort chevauchant le mécanisme d'articulation et intercalé entre l'organe de base et l'organe tournant.

6. Hydravion selon la revendication 5,
dans lequel
le moyen de liaison a une fonction d'atténuation consistant à atténuer une force de poussée du ressort.

7. Hydravion selon la revendication 5 ou 6,
dans lequel
une saillie sensiblement sphérique est formée sur l'un de l'organe de base et de l'organe tournant tandis qu'un évidement permettant d'y ajuster la saillie est formé sur l'autre de ceux-ci.

8. Hydravion selon la revendication 5 ou 6,
dans lequel
un matériau d'étanchéité non aqueux capable de se déformer élastiquement est intercalé entre une contre-face de l'organe de base et une contre-face de l'organe tournant.

9. Hydravion selon la revendication 5 ou 6,
dans lequel
une feuille étanche à l'eau flexible est prévue de façon à couvrir une périphérie de contre-faces respectives de l'organe de base et de l'organe tournant pour fermer de manière étanche à l'eau un espace entre les contre-faces.

10. Hydravion selon l'une quelconque des revendications 1 à 9,
dans lequel
un tampon (5) ayant une fonction d'élasticité et une fonction d'atténuation est disposé entre le corps principal d'hydravion et l'organe de base du flotteur, le tampon liant le corps principal d'hydravion à l'organe de base de manière à leur permettre de se déplacer l'un par rapport à l'autre.
